# FASCICULE DE BREVET EUROPEEN

(11) **EP 0 616 136 B1**
(45) Date de publication et mention de la délivrance du brevet: **19.06.1996**
(21) Numéro de dépôt: 93490005.1
(22) Date de dépôt: 19.03.1993
(51) Int. Cl.: F16B 12/20, F16B 21/02

(54) **Système d'assemblage de panneaux pour meubles au similaires**
Verbindung für Möbelpaneele oder dergleichen
Connection system for furniture panels or the like

(43) Date de publication de la demande: 21.09.1994
(73) Titulaire: Proot, Bernard, F-59650 Villeneuve D'Ascq (FR)
(72) Inventeur: Proot, Bernard, F-59650 Villeneuve D'Ascq (FR)
(74) Mandataire: Lepage, Jean-Pierre

(56) Documents cités:
- FR-A- 2 176 377
- FR-A- 2 406 405
- FR-A- 2 575 794
- GB-A- 1 046 924

## Description

La présente invention concerne une structure notamment utilisable en ameublement pour la réalisation de volumes à partir de panneaux.

Elle est relative à la fabrication d'éléments utilisables par exemple en ameublement ou en aménagement des locaux, fabrication de structures montables et démontables sans outil, pour la réalisation de volumes à partir de panneaux.

Ces panneaux peuvent être par exemple en bois ou dans un matériau similaire et on peut vouloir par exemple réaliser comme structure des bibliothèques ou des éléments de rangement et de décoration.

Lors de la fabrication et du montage de nombreuses structures, il est nécessaire d'utiliser un dispositif d'assemblage et de serrage des panneaux entre eux. Dans de nombreuses structures existantes, le dispositif de serrage comprend une pièce mâle et une pièce femelle et ce serrage est très souvent réalisé à l'aide d'un outil, tournevis ou clé.

Ainsi, le brevet français n° 2.406.405 décrit un assemblage comprenant plusieurs éléments tels que des inserts ainsi que des têtes excentriques qui viennent bloquer les inserts emboîtés dans les rainures se trouvant sur les chants des panneaux à assembler. De plus, les chants des panneaux sont obligatoirement coupés à 45° et le verrouillage s effectue par rotation d'un demi-tour des têtes excentriques.

Le procédé selon l'invention préconise au contraire d'assembler les chants dont les pans sont coupés à 90° qui ne possèdent pas de rainure. L'assemblage selon l'invention est réalisé par des pièces qui se placent sur les faces extérieures des panneaux en s'emboîtant dans les trous effectués sur ceux-ci et en serrant entre elles grâce à un verrou identique et spécifique qui est à la fois mâle et femelle. Le verrouillage, quant à lui, s'effectue par une simple rotation d'un quart de tour.

Le brevet français n° 2.575.794 décrit un dispositif d'assemblage comprenant deux têtes complémentaires et différentes qui doivent impérativement se monter à l'avance sur les panneaux à assembler.

La première pièce porte un goujon d'assemblage et un organe mobile de commande pour le blocage du dispositif tandis que la deuxième pièce renferme des moyens d'accrochage élastiques. Au contraire, le procédé selon l'invention dispose de pièces identiques mâles et femelles et n'utilise pas de principe d'accrochage élastique. De plus, les éléments de l'invention se positionnent sur l'extérieur des panneaux à assembler et n'obligent pas à les positionner avant l'assemblage.

Le brevet britannique n° 1.046.924 utilise des éléments d'accouplement qui viennent obligatoirement s'emboîter dans les fentes réalisées sur les éléments à assembler et dont les chants sont également obligatoirement coupés à 45° pour former des angles à 90°.

Le verrouillage s'effectue au moyen de disques excentriques insérés dans les perforations, serrés à fond en utilisant des cylindres guides. Le verrou excentrique est composé de deux pièces complémentaires mâle et femelle pour le serrage.

Au contraire, le dispositif d'assemblage et de serrage est intégré à la structure selon l'invention puisque les chants sont coupés à 90° et qu'ils ne possèdent pas de fente. L'assemblage selon l'invention est réalisé par des pièces qui se placent sur les faces extérieures des panneaux et s'emboîtent dans des trous effectués dans ceux-ci et en se serrant entre elles grâce à un verrou identique spécifique qui est à la fois mâle et femelle et non excentrique.

Le verrouillage quant à lui s'effectue par une simple rotation quart de tour des pièces.

La demande de brevet européen n° 0.326.802 décrit un assemblage qui utilise deux éléments différents et complémentaires :
- le premier élément possède un membre d'engagement qui se déplace radialement vers l'intérieur, qui possède un principe de ressort permettant le blocage du membre d'engagement. Cet élément doit être obligatoirement positionné dans un orifice de montage spécifique à cause du déplacement radial du membre d'engagement et non pas dans un trou cylindrique unique tel que décrit dans l'invention. En effet le membre d'engagement ressort sur les chants du panneau à assembler.
- un deuxième élément, qui représente la partie femelle de la branche d'engagement, possède des ressorts en forme d'hameçon pour l'empêcher de ressortir du panneau après l'avoir emboîté. Ce procédé utilise également un outil spécifique pour le verrouillage, qui s'utilise sur le premier élément.

Le dispositif décrit est différent du dispositif selon l'invention car l'invention utilise un verrou identique mâle et femelle sur des pièces qui s'emboîtent dans des trous cylindriques réalisés sur les faces extérieures du panneau à assembler.

Un des premiers buts de la structure selon l'invention est de prévoir un dispositif de verrouillage dont les pièces de verrouillage sont de forme exactement identique. La conception et la fabrication du dispositif de verrouillage seront donc plus faciles et moins onéreuses car pour certaines applications par exemple, les pièces de verrouillage ainsi que la pièce de liaison seront réalisées en matière plastique injectée et un seul moule sera nécessaire pour réaliser les deux pièces.

Un autre but de la structure selon l'invention est de mettre en oeuvre un serrage par rotation sans accrochage par des moyens élastiques.

Un autre avantage de la structure selon l'invention est que les éléments du dispositif d'assemblage se positionnent sur l'extérieur des panneaux et ne doivent pas être placés avant assemblage.

Un autre but de la structure comprenant un dispositif de verrouillage selon l'invention est de permettre d'assembler des panneaux dont les chants sont coupés à 90°.

Un autre objet de l'invention est de pouvoir être mis en oeuvre avec une simplicité du verrouillage par simple rotation d'une pièce identique d'un quart de tour.

La présente invention vise à remédier aux inconvénients de l'état de la technique cité ci-dessus.

La structure selon l'invention, notamment utilisable en ameublement pour la réalisation d'un volume à partir de panneaux, comprenant :
- des panneaux perforés au moyen d'un trou cylindrique au niveau des côtés à assembler,
- un dispositif d'assemblage et de serrage des panneaux comprenant une pièce de liaison avec deux ailes en appui sur chaque panneau à assembler, caractérisée par le fait que le dispositif d'assemblage est réalisé de la manière suivante :
   A) une première pièce de verrouillage composée :
      - d'une base cylindrique de même diamètre que le trou,
      - d'un noyau cylindrique de diamètre inférieur à la base,
      - d'un ergot de longueur inférieure au diamètre de la base,
      - d'un logement permettant de recevoir et de bloquer l'ergot
   B) une deuxième pièce de verrouillage identique à la première,
   la première pièce étant engagée dans le trou par l'une des faces du panneau alors que la deuxième pièce rentre dans le trou par l'autre face et s'emboîte dans la première pièce ; le verrouillage et le serrage étant obtenu par la rotation d'un quart de tour d'une des pièces par coopération de l'ergot de la première qui entre dans le logement de la seconde alors que l'ergot de la seconde entre dans le logement de la première, les plans inclinés inverses sur les ergots et les logements créant le serrage.

L'invention sera bien comprise en se référant à la description suivante, d'un mode d'exécution non limitatif dans lequel :
- la figure 1 est une vue partielle d'un panneau perforé,
- la figure 2 est une vue partielle du dispositif de verrouillage,
- la figure 3 est une vue de la deuxième pièce de verrouillage identique à la première,
- la figure 4 montre différents dispositifs de verrouillage appliqués sur trois panneaux,
- la figure 5 montre un mode d'exécution montrant la construction avec une pièce de liaison en équerre à 90°, qui relie deux panneaux,
- la figure 6 montre une liaison entre deux panneaux avec deux pièces de liaison en équerre et une pièce de liaison plane,
- la figure 7 montre le dispositif de verrouillage avec les première et deuxième pièces de verrouillage mises en position rapprochée.

L'invention sera bien comprise en se référant à la description suivante d'un mode d'exécution pris à titre d'exemple non limitatif.

L'invention est relative à une structure notamment utilisable en ameublement et en aménagement de locaux. Elle pourra par exemple être mise en oeuvre à chaque fois que l'on cherchera à réaliser des volumes à partir de panneaux en bois ou dans un matériau similaire. Ces panneaux pourront être par exemple de même épaisseur ou d'épaisseurs différentes, l'invention pourra également être utilisée à chaque fois que l'on cherchera à vendre un mobilier en kit, c'est-à-dire emballé sous une forme très ramassée qui pourra être montée par l'utilisateur ou l'acheteur.

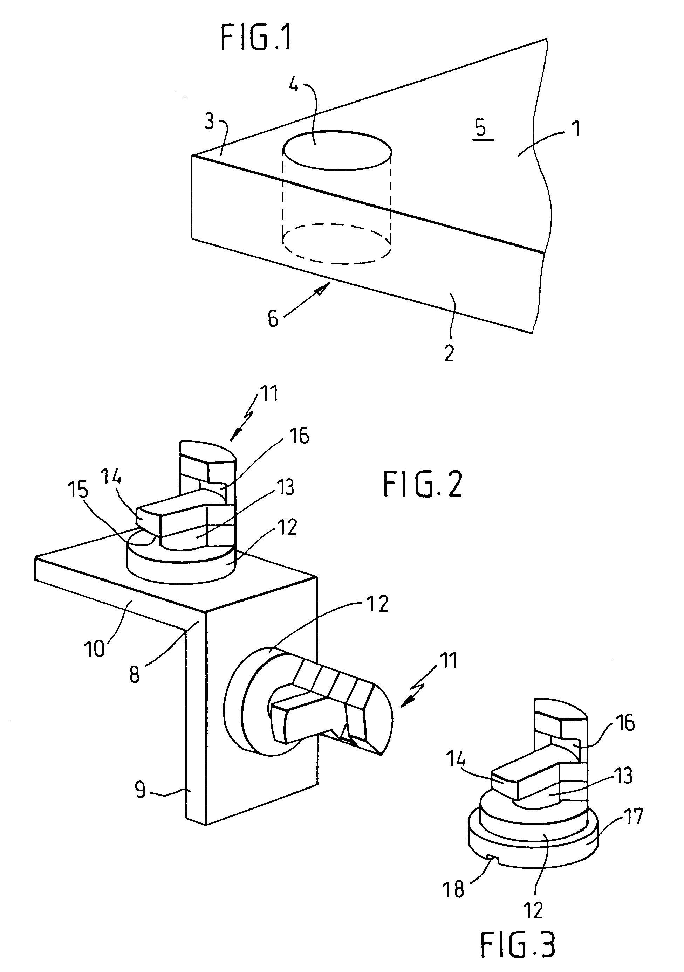

On a représenté à la figure 1 une partie d'un panneau (1) pouvant être réalisé dans tout matériau approprié tels que du bois massif, aggloméré ou contreplaqué ou d'une autre nature. Ce panneau étant destiné par exemple à la réalisation d'une structure pour la fabrication d'un volume tel qu'une bibliothèque, un espace de rangement ou un meuble. Ce panneau (1) a une épaisseur (2) par exemple de l'ordre de quelques centimètres. On a réalisé dans un angle (3) du panneau un orifice (4) qui perce de part en part le panneau depuis sa face supérieure (5) jusqu'à sa face inférieure (6). Ce trou (4) est un perçage de forme cylindrique.

A chaque fois que l'on aura à assembler deux panneaux tels que (1), on réalisera des trous similaires à (4) sur les côtés des panneaux à assembler.

On a représenté à la figure 2 un dispositif d'assemblage et de serrage désigné généralement par (7), qui comprend une pièce de liaison (8) dont les ailes (9) et (10) viendront en appui sur les faces de chacun des deux panneaux à assembler. Dans l'exemple représenté, cette liaison (8) a une forme d'équerre à 90° mais elle pourrait également être réalisée avec un angle différent.

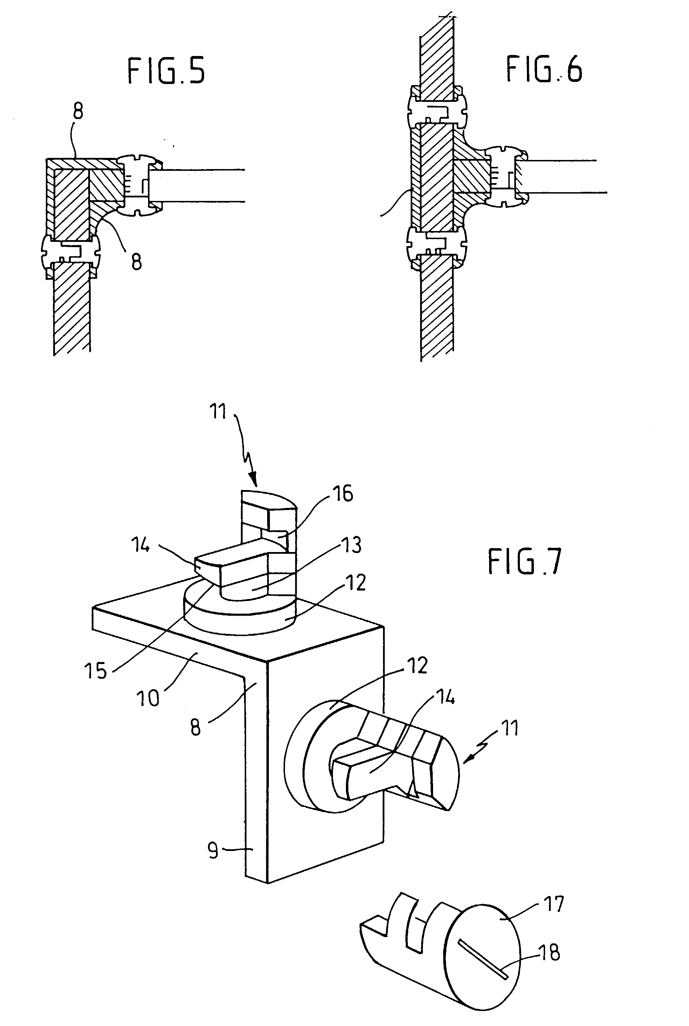

Il est également concevable, tel que cela est représenté à la figure 6, que la pièce de liaison (8) n'ait plus une forme angulaire et elle sera alors plane.

Sur chaque aile de chaque pièce de liaison on a aménagé une première pièce de verrouillage désignée généralement par (11). Chaque première pièce de verrouillage peut être soit solidaire de la pièce de liaison, soit traversant un orifice (non représenté) aménagé dans la pièce de liaison pour venir dans une position représentée à la figure 2.

Pour cette figure, on a réalisé par exemple des pièces de verrouillage (11) en une seule pièce par moulage avec l'équerre (8). On pourra toutefois fabriquer ces pièces en aluminium ou dans un autre matériau.

La première pièce de verrouillage (11) dont la hauteur est inférieure à l'épaisseur (2) des panneaux à assembler sera formée des quatre parties distinctives qui auront chacune une fonction dans le montage, l'assemblage et le serrage du dispositif.

On a aménagé sur la première pièce de verrouillage (11) une base cylindrique (12) de même diamètre que le trou (4) du panneau (2).

Un noyau cylindrique (13) est prévu au-dessus de la base de dimension inférieure à celle-ci.

Un ergot (14) de longueur inférieure au diamètre de la base a été réalisé avec un plan incliné (15) sur la partie inférieure.

Un logement (16) de même section que le noyau et l'ergot permet de recevoir et de bloquer dans deux directions l'ergot de la deuxième pièce de verrouillage.

On a représenté à la figure 3 cette deuxième pièce de verrouillage avec sa base (12), son noyau (13), son ergot (14) avec son plan incliné (15) et son logement (16) permettant de recevoir et de bloquer l'ergot (14) de la première pièce de verrouillage de la figure 2.

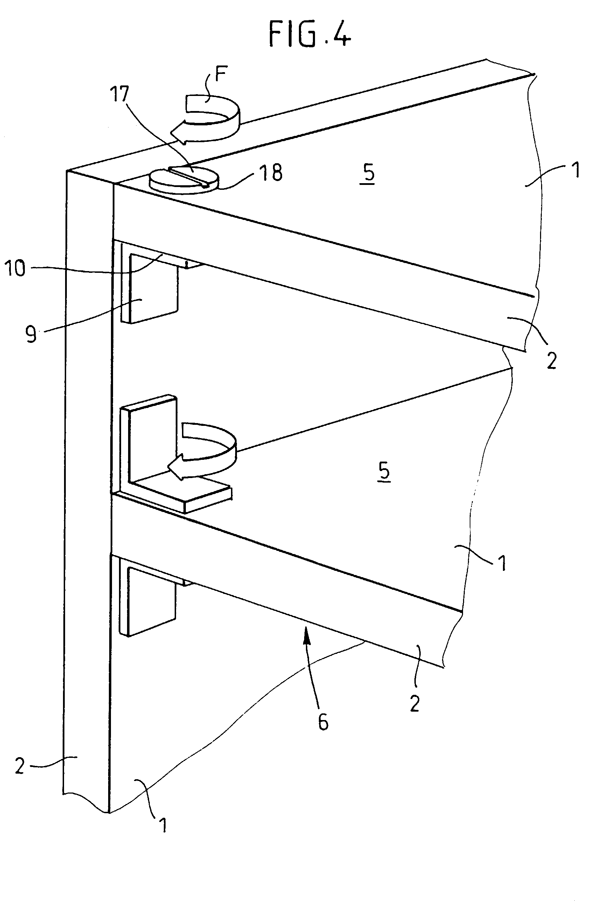

La partie inférieure des première et deuxième pièces de verrouillage comprend en dessous de la base (12) une partie (17) de diamètre supérieur au trou (4) afin que la deuxième pièce de verrouillage puisse se placer à l'extérieur de la face (5) du panneau, comme cela est représenté à la figure 4. Ainsi, seule l'épaisseur de cette partie (17) dépassera en affleurant légèrement la surface externe du panneaux. Sur cette partie (17) est aménagée une fente (18) permettant de manoeuvrer plus rapidement le blocage et le serrage des pièces de verrouillage.

On a représenté à la figure 4 trois panneaux (1) dont un est vertical et deux sont horizontaux et on a voulu fixer ces panneaux entre eux pour réaliser une structure notamment utilisable par exemple en ameublement.

Lorsque les perçages (4) ont été réalisés dans les différents panneaux, on a engagé sous le panneau horizontal et contre le panneau vertical une équerre par ses ailes (9 et 10). Ce montage a été réalisé facilement puisqu'il y a un accès par l'extérieur des panneaux. Les deux premières pièces de verrouillage (11) fixées sur les ailes (9) et (10) ont été engagées dans les trous (4) sur l'épaisseur des panneaux alors que la deuxième pièce de verrouillage a été introduite dans le trou par l'autre face du panneau.

Cette disposition schématisée à la figure 7 permet de rapprocher la première pièce de verrouillage de la seconde avant de les mettre dans une position de serrage et de verrouillage. Lorsque les deuxièmes pièces sont correctement rapprochées et emboîtées dans le trou (4) au-dessus des premières pièces, le verrouillage et le serrage sont obtenus par la rotation d'un quart de tour dans le sens de la flèche F d'une des deux pièces. Ce serrage et ce verrouillage sont obtenus par la coopération de l'ergot (14) de la première pièce qui entre dans le logement (16) de la seconde pièce de verrouillage alors que l'ergot (14) de la seconde pièce entre dans le logement (16) de la première.

Les plans inclinés (15) qui sont inversés sur les ergots et les logements créent le serrage et le blocage.

L'assemblage et le serrage des panneaux sont simples et l'on pourra également obtenir facilement le déblocage par rotation d'un quart de tour dans l'autre sens.

L'invention permet également différents modes de réalisation schématisés aux figures 5 et 6 avec une pièce de liaison en équerre pour relier deux panneaux ou avec deux équerres et une pièce de liaison plane d'un côté et une liaison en équerre de l'autre.

L'invention permettra à l'utilisateur de réaliser des volumes constitués à partir de panneaux assemblés et serrés à l'aide de dispositifs constitués à partir de pièces de verrouillage identiques. Il lui suffira d'emboîter les pièces de verrouillage dans les trous des panneaux et de venir serrer la pièce en effectuant un quart de tour.

## Revendications

1. Structure notamment utilisable en ameublement pour la réalisation d'un volume à partir de panneaux, comprenant :
- des panneaux perforés (1) au moyen d'un trou cylindrique (4) au niveau des côtés à assembler,
- un dispositif d'assemblage et de serrage (7) des panneaux comprenant une pièce de liaison (8) avec deux ailes (9, 10) en appui sur chaque panneau (1) à assembler,
caractérisée par le fait que le dispositif d'assemblage (7) est réalisé de la manière suivante :
A) une première pièce de verrouillage (11) composée :
- d'une base cylindrique (12) de même diamètre que le trou (4),
- d'un noyau cylindrique (13) de diamètre inférieur à la base (12),
- d'un ergot (14) de longueur inférieure au diamètre de la base (12),
- d'un logement (16) permettant de recevoir et de bloquer l'ergot (14)
B) une deuxième pièce de verrouillage (11) identique à la première,
la première pièce (11) étant engagée dans le trou (4) par l'une des faces du panneau alors que la deuxième pièce (11) rentre dans le trou (4) par l'autre face et s'emboîte dans la première pièce ; le verrouillage et le serrage étant obtenu par la rotation d'un quart de tour d'une des pièces par coopération de l'ergot (14) de la première qui entre dans le logement (16) de la seconde alors que l'ergot (14) de la seconde entre dans le logement (16) de la première.

2. Structure notamment utilisable en ameublement pour la réalisation de volumes à partir de panneaux, selon la revendication 1, caractérisée par le fait que l'ergot (14) présente un plan incliné (15) sur sa partie inférieure et le logement (16) un plan incliné inverse sur sa partie supérieure pour créer et améliorer le serrage.

3. Structure notamment utilisable en ameublement pour la réalisation de volumes à partir de panneaux, selon la revendication 1, caractérisée par le fait que la pièce de liaison (8) a la forme d'une équerre à 90° ou avec un autre angle.

4. Structure notamment utilisable en ameublement pour la réalisation de volumes à partir de panneaux, selon la revendication 1, caractérisée par le fait que les pièces de verrouillage ont une hauteur inférieure à l'épaisseur du panneaux.

5. Structure notamment utilisable en ameublement pour la réalisation de volumes à partir de panneaux, selon la revendication 1, caractérisée par le fait que la partie supérieure des pièces de verrouillage a une dimension supérieure au trou et dépasse en (17) des faces externes du panneau.

## Patentansprüche

1. Struktur, die nämlich bei Möbeln verwendbar ist, um ab Paneelen ein Volumen zustandezubringen, umfassend:
- mittels eines zylindrischen Loches (4) im Bereich der zu verbindenden Seiten durchbohrte Paneele (1),
- eine Vorrichtung (7) zum Verbinden und Spannen der Paneele, die einen Verbindungsteil (8) mit zwei an jedem zu verbindenden Paneel (1) anlehnenden Flügeln (9, 10) umfaßt,
dadurch gekennzeichnet, daß die Verbindungsvorrichtung (7) wie folgt ausgestaltet ist:
A) ein erster Verriegelungsteil (11), der aus:
- einer zylindrischen Base (12) mit demgleichen Durchmesser als das Loch (4),
- einem zylindrischen Kern (13) mit einem kleineren Durchmesser als derjenige der Base (12),
- einem Vorsprung (14) mit einer Länge, die kleiner ist als der Durchmesser der Base (12),
- einer Aussparung (16), die es erlaubt, den Vorsprung (14) aufzunehmen und zu verriegeln,
besteht,
B) ein zweiter Verriegelungsteil (11), der identisch gleich des ersten ist,
wobei der erste Teil (11) von einer Fläche des Paneels her in das Loch (4) hineingeführt wird, während der zweite Teil (11) von der anderen Fläche her in das Loch (4) hineingeführt wird und mit dem ersten Teil ineinandergreift. wobei die Verriegelung und die Spannung durch Vierteldrehung eines der Teile, durch Zusammenwirkung des Vorsprungs (14) des ersten, der in die Aussparung (16) des zweiten eingreift, während der Vorsprung (14) des zweiten in die Aussparung (16) des ersten eingreift, erhalten wird.

2. Struktur, die nämlich bei Möbeln verwendbar ist, um ab Paneelen ein Volumen zustandezubringen, nach Anspruch 1, dadurch gekennzeichnet, daß der Vorsprung (14) an seinem Unterteil eine schiefe Ebene (15) und die Aussparung (16) an ihrem Oberteil eine umgekehrte schiefe Ebene aufweist, um die Spannung zustandezubringen und zu verbessern.

3. Struktur, die nämlich bei Möbeln verwendbar ist, um ab Paneelen ein Volumen zustandezubringen, nach Anspruch 1, dadurch gekennzeichnet, daß der Verbindungsteil (8) die Gestalt eines Winkeleisens mit einem 90°- oder einem anderen Winkel hat.

4. Struktur, die nämlich bei Möbeln verwendbar ist, um ab Paneelen ein Volumen zustandezubringen, nach Anspruch 1, dadurch gekennzeichnet, daß die Vemegelungsteile eine Höhe haben, die kleiner ist als die Dicke der Paneele.

5. Struktur, die nämlich bei Möbeln verwendbar ist, um ab Paneelen ein Volumen zustandezubringen, nach Anspruch 1, dadurch gekennzeichnet, daß der Oberteil der Verriegelungsteile eine Größe hat, die größer ist als das Loch und an (17) aus den Außenflächen des Paneels herausragt.

## Claims

1. Structure, namely for being used in furriture for creating a volume starting from pannels, comprising:
- pannels (1) perforated by means of a cylindrical hole (4) at the level of the sides to be connected,
- a device (7) for connecting and clamping the pannels, comprising a connecting part (8) with two wings (9, 10) resting against each pannel (1) to be connected,
characterized in that the connecting device (7) is made as follows:
A) a first locking part (11) comprised of:
- a cylindrical base (12) with the same diameter as the hole (4),
- a cylindrical core (13) with a diameter smaller than the base (12),
- a catch (14) with a length smaller than the diameter of the base (12),
- a recess (16) allowing to receive and lock the catch (14),
B) a second locking part (11) identical to the first one,
the first part (11) being inserted into the hole (4) from one face of the pannel, whilst the second part (11) penetrates into the hole (4) from the other face and fits into the first part, the locking and clamping being achieved through a quater-turn rotation of one of the parts, through co-operation of the catch (14) of the first one which penetrates into the recess (16) of the second one, whilst the catch (14) of the second one penetrates into the recess (16) of the first one.

2. Structure, namely for being used in furniture for creating a volume starting from pannels, according to claim 1, characterized in that the catch (14) has an inclined plane (15) at its lower portion and the recess (16) a reversed inclined plane at its upper portion, in order to create and improve the clamping.

3. Structure, namely for being used in furniture for creating a volume starting from pannels, according to claim 1, characterized in that the connecting part (8) has the shape of an angle iron with a 90° or another angle.

4. Structure, namely for being used in furniture for creating a volume starting from pannels, according to claim 1, characterized in that the locking parts have a height smaller than the thickness of the pannels.

5. Structure, namely for being used in furniture for creating a volume starting from pannels, according to claim 1, characterized in that the upper portion of the locking parts has a size larger than the hole and emerges at (17) out of the external faces of the pannel.
